# EUROPÄISCHE PATENTSCHRIFT

(11) **EP 1 873 484 B1**
(45) Veröffentlichungstag und Bekanntmachung des Hinweises auf die Patenterteilung: **10.09.2008**
(21) Anmeldenummer: 06013548.0
(22) Anmeldetag: 30.06.2006
(51) Int. Cl.: G01B 13/22

(54) **Verfahren und Vorrichtung zum Erfassen von Unregelmässigkeiten in der Topographie von Oberflächen an Bauteilen, insbesondere an rotationssymetrischen Bauteilen**
Method and device for detecting irregularities in the topography of surfaces on workpieces, in particular on workpieces with rotational symmetry
Procédé et dispositif pour déterminer des irrégularités dans la topographie superficielle d'un objet, en particulier d'un objet symétrique en rotation

(43) Veröffentlichungstag der Anmeldung: 02.01.2008
(73) Patentinhaber: INPRO Innovationsgesellschaft für fortgeschrittene Produktionssysteme in der Fahrzeugindustrie mbH, 10587 Berlin (DE)
(72) Erfinder: Barioudi, Abdellah c/o Inpro GmbH, 10587 Berlin (DE); Gigengack, Thomas, 10785 Berlin (DE)
(74) Vertreter: Hoffmann, Klaus-Dieter

(56) Entgegenhaltungen:
- CH-A- 500 472
- DE-C1- 10 234 590
- JP-A- 62 096 806

## Beschreibung

Die Erfindung betrifft ein Verfahren zum Erfassen von Unregelmäßigkeiten in der Topographie von Oberflächen an Bauteilen, insbesondere an rotationssymetrischen Bauteilen, mittels eines auf die zu untersuchende Oberfläche an dem Bauteil aus einer Düsenöffnung zu richtenden wirbelarmen Gasstroms, wobei der beim Strömen des Gasstroms über Unregelmäßigkeiten in der Topographie durch Strömungsrauschen erzeugte Schall detektiert und ausgewertet wird,.

Die Erfindung betrifft weiterhin eine Vorrichtung zum Erfassen von Unregelmäßigkeiten in der Topographie von Oberflächen an Bauteilen, insbesondere an rotationssymmetrischen Bauteilen, mit einer in einem Gehäuse ausgebildeten Düse zur Erzeugung eines von der Düsenöffnung auf die zu untersuchende Oberfläche gerichteten wirbelarmen Gasstroms und mit mindestens einem Schalldetektor oder Mikrofon zur Erfassung des durch den Gasstrom erzeugten Schalls.

Bei einer aus der DE 102 34 590 Cl bekannten derartigen Vorrichtung zum Detektieren von Unregelmäßigkeiten wie Risse, Kanten, Poren oder dergleichen in der Topographie von Oberflächen an Gegenständen, die nur zum punktuellen Detektieren dient, ist die Düse zur Verbesserung der Empfindlichkeit der Vorrichtung gegenüber der Strömungsrichtung des Gasstroms abgeschrägt.

Eine Vorrichtung der eingangs genannten Art ist auch aus DGZfP Jahrestagung 2001; ZfP in Anwendung, Entwicklung und Forschung, Berlin, 21.-23. Mai 2001, Berichtsband 785-CD, Beitrag: J. Frangen "Turbulenzsensor zur Riss- und Porendetektion- Ein neues Prüfverfahren" bekannt.

Bekannt ist ferner eine weitere Vorrichtung der eingangs erwähnten Art (DE 199 52 454 A1), bei der aus einer im Bereich der Gasaustrittsöffnung aus Glas hergestellten Gasdüse ein laminarer Gasstrom senkrecht auf die zu untersuchende Oberfläche ausgerichtet ist. Zur Schallerfassung ist hier mindestens ein Mikrofon vorgesehen, das den Schallpegel bei einer Wechselwirkung des Gasstroms mit der zu untersuchenden Oberfläche als Maß für Unregelmäßigkeiten der Oberfläche aufnimmt. Auch diese bekannte Vorrichtung ist auf Grund ihrer Konstruktion nur für punktuelle Messungen einsetzbar. Wenn ausgedehnte Oberflächen zu kontrollieren sind, ist ein Scannen der zu untersuchenden Oberfläche erforderlich, was lange Meßzeiten bedingt.

Bei runden, rotationssymmetrischen Bauteilen ist zudem ein verhältnismäßig komplizierter Spannvorgang für das Bauteil und gegebenenfalls eine Drehbewegung des Bauteils erforderlich. Die Erfindung zielt somit auf eine Minimierung der Meßzeiten und des Spannaufwandes für die Bauteile.

Der Erfindung liegt daher die Aufgabe zugrunde, ein Verfahren und eine Vorrichtung gemäß der eingangs erwähnten Art so zu gestalten, daß bei Vermeidung langer Meßzeiten ausgedehnte Oberflächen an Bauteilen, insbesondere an rotationssymmetrischen Bauteilen auf Unregelmäßigkeiten fortlaufend überprüft werden können. Insbesondere soll auch bei kompliziert aufgebauten Bauteilen, wie z.B. bei Kurbelwellen, eine Zugänglichkeit der erfindungsgemäßen Vorrichtung zur Überprüfung der zu untersuchenden Oberfläche auf Unregelmäßigkeiten gewährleistet sein.

Die Aufgabe wird verfahrensmäßig erfindungsgemäß dadurch gelöst, daß
- eine Schlitzdüse mit einer sich flächenmäßig erstreckenden Schlitzöffnung verwendet wird, die senkrecht zur Mittelebene der Schlitzdüse angeordnet ist,
- das die Schlitzdüse enthaltene Gehäuse und das die zu untersuchende Oberfläche aufweisende Bauteil relativ zueinander bewegt werden,
- wobei die sich flächenmäßig erstreckende Schlitzöffnung in geringfügigem Arbeitsabstand zu der zu untersuchenden Oberfläche am Bauteil so positioniert wird,
- daß die zu untersuchende Oberfläche an dem Bauteil von einem aus der sich flächenmäßig erstreckenden Schlitzdüse austretenden laminaren Druckluftstrom fortschreitend entsprechend flächenmäßig angeströmt wird und
- gleichzeitig fortgesetzt eine momentan entsprechend flächenmäßige Überprüfung der Topographie der zu untersuchen Oberfläche an dem Bauteil auf Unregelmäßigkeiten mittels einer Vielzahl von Mikrofonen erfolgt.
   Die Erfindung wird erfindungsgemäß auch mit einer eingangs genannten Vorrichtung gelöst, die dadurch gekennzeichnet ist, daß
- eine zumindest teilkreisringförmige, breitenmäßig zu verstellende Schlitzdüse mit einer zumindest teilkreisringförmigen Schlitzöffnung vorgesehen ist, zu deren mittigen Radialebene die zu untersuchende Oberfläche des Bauteils winklig im Gehäuse anzuordnen ist derart,
- daß die teilkreisringförmige Schlitzöffnung in geringfügigem Arbeitsabstand zu der zu untersuchende Oberfläche an dem Bauteil dieses zumindest teilkreisringförmig umfaßt und die zu untersuchende Oberfläche an dem Bauteil von einem aus der teilkreisringförmigen Schlitzöffnung gerichteten laminaren Druckluftstrom zumindest teilkreisringförmig anzuströmen ist,
- wobei mehrere Mikrofone in zumindest teilringförmig Anordnung am Gehäuse zur Erfassung des durch den Druckluftstrom erzeugten Schalls vorgesehen sind.

Bevorzugt ist die Schlitzöffnung der Schlitzdüse als kompletter Ring gestaltet. Das Schlitzdüse enthaltene Gehäuse ist vorzugsweise rotationssymmetrisch und kann die Form eines Zylinders aufweisen.

Das die Düse enthaltene Gehäuse kann auch eine zumindest teilzylindrische Form aufweisen, insbesondere die Form eines Halbzylinders, von dem das die zu untersuchendse Oberfläche aufweisende Bauteil nach Kopplung mit einem identisch ausgebildeten Halbzylinder umfaßt wird.

Vorteilhafterweise ist das die Schlitzdüse enthaltene Gehäuse zusammengebaut ist aus,
- einem ersten und einem zweiten hohlzylinderartigen Element, die koaxial zur Längsmittellinie des Gehäuses angeordnet und relativ zueinander zu versetzen sind und an ihren einander zugewandten Stirnseiten sich zur Längsmittellinie des Gehäuses einwärts erstreckende Teile aufweisen mit einandergegenüberliegenden radial gerichteten Stirnflächen, die die Schlitzdüse breitenmäßig begrenzen,
   mit Abschnitten, die jeweils an die radial gerichteten Stirnflächen angrenzen, zur kreiringförmigen Schlitzöffnung der Schlitzdüse fluchtend koplanar angeordnet sind, einen in Richtung der Längsmittellinie des Gehäuses verlaufenden Durchlaß im Gehäuse bilden, durch den das Bauteil mit der zu untersuchenden Oberfläche zu führen ist und in den die ringförmige Schlitzöffnung der Schlitzdüse mündet, und
   mit Ausnehmungen, die an den radialen Stirnflächen außenmantelseitig ausgebildet sind und gemeinsam einen ringförmigen Hohlraum bilden, der zum Außenmantel des ersten hohlzylinderartigen Elements offen ist und mit der Schlitzdüse kommuniziert,
- aus einem zylindrischen Hohlkörper, der koaxial zu dem ersten und dem zweiten hohlzylinderartigen Element angeordnet ist,
   dessen Innenmantel den Außenmantel des ersten hohlzylinderartigen Elements mit Spiel umfaßt und den Hohlraum zu einer ringförmigen Druckkammer verschließt,
wobei der Außenmantel des zylindrischen Hohlkörpers mit dem Außenmantel des zweiten hohlzylinderartigen Elements fluchtet, das an dem zylindrischen Hohlkörper zu befestigen ist,
die Zylinderwand der Hohlkörpers von einem Kanal durchsetzt ist, der mit der Druckkammer kommuniziert und mit einer äußeren Luftzufuhr zu verbinden ist, und
wobei der zylindrische Hohlkörper an seinem ersten Ende in Richtung der Längsmittellinie des Gehäuses über das erste hohlzylinderartige Elemente vorsteht und mit der radial gerichteten Stirnfläche an seinem zweiten Ende an einer innengelegenen umlaufenden Widerlagerfläche des zweiten hohlzylinderartigen Elements anliegt,
- aus einer Abdeckscheibe, deren Außendurchmesser gleich dem Durchmesser des Außenmantels des zylindrischen Hohlkörpers ist und die plan auf der radial gerichteten Stirnfläche am ersten Ende des zylindrischen Hohlkörpers anliegt und mittels Schrauben abnehmbar befestigt ist, die durch erste Bohrungen, die die Abdeckscheibe in Richtung der Längsmittellinie des Gehäuses durchsetzen, geführt und in mit den ersten Bohrungen fluchtende erste Gewindebohrungen in der Zylinderwand des zylindrischen Hohlkörpers geschraubt sind,
wobei der zylindrische Hohlkörper mit der radialen Stirnfläche an seinem zweiten Ende an der Widerlagerfläche des zweiten hohlzylinderartigen Elements festgelegt ist, und
- aus Einstellschrauben, die durch zweite Bohrungen, die die Abdeckscheibe ebenfalls in Richtung der Längsmittellinie des Gehäuses durchsetzen, und durch einen ringförmigen Hohlraum zwischen der Abdeckscheibe und der dieser zugewandten radialen Stirnfläche des ersten hohlzylinderartigen Elements geführt und in zweite Gewindebohrungen geschraubt sind, die mit den zweiten Bohrungen fluchten und in der Zylinderwand des zweiten hohlzylinderartigen Elements ausgebildet sind, wobei durch ein gleichgerichtetes Drehen der Einstellschrauben das zweite hohlzylinderartige Element, das mit Spiel zum Innenmantel des zylindrischen Hohlkörpers angeordnet ist, in Richtung der Längsmittellinie des Gehäuses in Bezug auf das zweite hohlzylinderartige Element zu versetzen ist und dabei die Breite der Schlitzdüse, die von den einandergegenüberliegenden radialen Stirnflächen der Endteile des ersten und des zweiten hohlzylinderartigen Elements begrenzt ist, derart einzustellen ist, daß aus der ringförmigen Schlitzöffnung der Schlitzdüse, die mit der Druckkammer kommuniziert, die über den Kanal in der Zylinderwand der zylindrischen Hohlkörpers an die äußere Druckluftzufuhr anzuschließen ist, ein laminarer Druckluftstrom auf die untersuchende Oberfläche des Bauteils gerichtet ist, das durch den Durchlaß des Gehäuses, der von den Endteilen des ersten und des zweiten hohlzylinderartigen Elements gebildet ist, in Richtung der Mittellinie des Gehäuses zu führen ist.

Das die Schlitzdüse enthaltene Gehäuse kann ortsfest gelagert und das Bauteil von einer z.B. mit Rollen ausgerüsteten Transporteinrichtung in Richtung der Längsmittellinie des Gehäuses kontinuierlich zu bewegen sein. Auch können das Gehäuse und das Bauteil relativ zueinander zu bewegen und/oder das Gehäuse mittels einer Roboters entlang des Bauteils zu führen sein. Die Breite der Schlitzöffnung wird mittels der Einstellschrauben vorzugsweise im Bereich von 0,05 bis 0,5 mm eingestellt, so daß bei Erzeugen eines Drucks im Bereich von 50 bis 2000 mBar ein laminarer Druckluftstrom mit einer Geschwindigkeit im Bereich von 0,5 bis 0,95 Mach (ca. 175 m/s bis 330 m/s) aus der Schlitzdüsenöffnung auf die zu untersuchende Oberfläche des Bauteils zu richten ist. Kommt der laminare Druckluftstrom in die Nähe einer Unregelmäßigkeit auf der zu untersuchenden Oberfläche an dem Bauteil, so wird die Druckluftströmung turbulent und ein hierbei unmittelbar einsetzendes Rauschen wird von den Mikrofonen der Vorrichtung erfaßt.

Die eingangs genannte Vorrichtung kann erfindungsgemäß auch dadurch gekennzeichnet sein, daß das Gehäuse zwei spiegelbildliche, zu einander beabstandete Düsenplatten aufweist, die sich über die Länge des Gehäuses erstrecken, von diesem stirnseitig abgedeckt sind und eine Längsschlitzdüse mit einer Längsschlitzöffnung breitenmäßig verstellbar begrenzen, mittels Einstellschrauben relativ zueinander zu bewegen sind und innenseitig entgegengesetzt zur Längsschlitzöffnung zusammen mit einer Abdeckplatte, die auf den zur Längsschlitzöffnung entgegengesetzten Längskanten der Düsenplatten über deren Länge aufliegt, einen Hohlraum einfassen, der eine Druckkammer bildet, die über einen die Abdeckplatte durchsetzenden Kanal mit einer äußeren Druckluftzufuhr zu verbinden ist und mit der Längsschlitzdüse kommuniziert, wobei das Gehäuse relativ beweglich zu der zu untersuchenden Oberfläche an dem Bauteil zu haltern ist derart, daß die zu untersuchende Oberfläche an dem Bauteil von einem aus der Längsschlitzöffnung gerichteten laminaren Druckluftstrom fortschreitend entsprechend flächenmäßig anzuströmen ist und gleichzeitig mittels einer Vielzahl Mikrofone, die an den Außenflächen der Düsenplatten im Abstand zueinander gehaltert sind, fortlaufend eine momentan entsprechend flächenmäßige Überprüfung der Topographie der zu untersuchenden Oberfläche an dem Bauteil gegeben ist.

Die Kapseln der Mikrofone können vorteilhafterweise jeweils in einem Schalltrichter mit einer runden oder einer flachen Schalleinrittsöffnung vorgesehen sein, die jeweils in unmittebarer Nachbarschfaft zur Schlitzöffnung der Längsschmitzdüse zu positionieren ist und eine punktuelle bzw. linienförmige Erfassung eines relevanten Schallereignisses durch die im Schalltrichter angeordnete Mikrofonkapsel ermöglicht, wobei Störgeräusche weitgehend ausgeblendet sind.

Die erfindungsgemäße Vorrichtung ermöglicht im Gegensatz zum bisher üblichen punktuellen Überprüfen ein verhältnismäßig schnelles und fortgesetztes momentan flächenmäßiges Überprüfen ausgedehnter Oberflächen an Bauteilen, insbesondere an rototionssymmetrischen Bauteilen, auf Unregelmäßigkeiten wie Risse, Kanten, Poren oder dergleichen, wobei zudem eine günstige Zugänglichkeit bei verhältnismäßig aufwendig aufgebauten Bauteilen gewährleistet ist.

Bevorzugte Ausführungsformen der erfindungsgemäßen Vorrichtung werden nun anhand der Zeichnungen erläutert. In diesen sind:
**Fig. 1** eine Draufsicht auf einen Längsschnitts einer ersten Ausführungsform der Vorrichtung, bei der das die Schlitzdüse enthaltene Gehäuse die Form eines Zylinders hat und ein Bauteil durch das Gehäuse geführt ist,
**Fig. 2** eine perspektivische Ansicht der ersten Ausführungsform der Vorrichtung mit Blickrichtung auf Einstellschrauben an der ersten Stirnseite des das Bauteil umfassenden Gehäuses,
**Fig. 3** eine perspektivische Ansicht der ersten Ausführungsform der Vorrichtung mit Blickrichtung auf die zweite Stirnseite des das Bauteil umfassenden Gehäuses,
**Fig. 4** eine perspektivische Darstellung einer quaderförmigen Gehäusehälfte mit halbkreisringförmiger Schlitzöffnung der Schlitzdüse einer zweiten Ausführungsform der Vorrichtung und
**Fig. 5** eine perspektivische, teilweise geschnittene schematische Darstellung des Gehäuse einer dritten Ausführungsform der Vorrichtung mit in einer Ebene des Gehäuses angeordneten Längsschlitzöffnung einer Längsschlitzdüse.

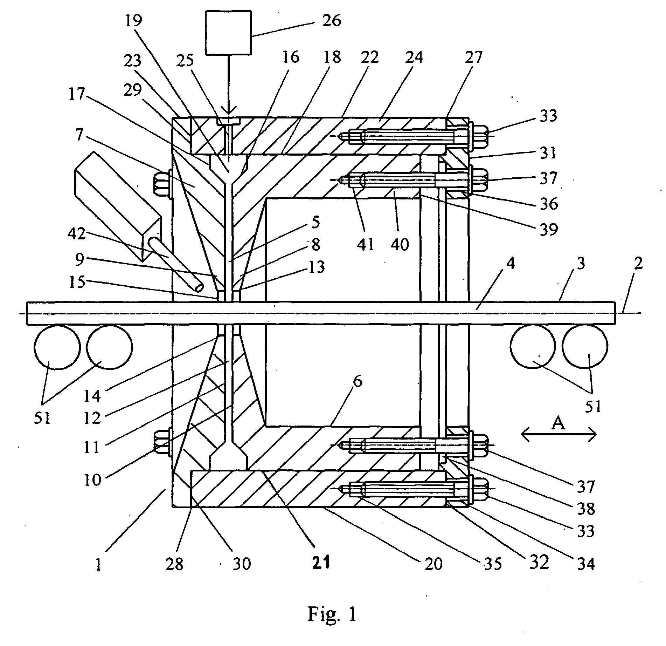

Aus den Fig. 1 bis 3 geht eine bevorzugte erste Ausführungsform der Vorrichtung mit einem Gehäuse 1 in Form eines Hohlzylinders hervor, in dessen Längsmittellinie 2 ein Bauteil 3 mit zu untersuchender Oberfläche 4 angeordnet ist. Wie Fig. 1 deutlich macht, ist das Gehäuse 1 unter Bildung einer Schlitzdüse 5 aus mehreren von einander lösbaren Teilen zusammengefügt. So weist das Gehäuse 1 ein erstes und einer zweites hohlzylinderartiges Element 6 und 7 auf, die koaxial zur Längsmittellinie 2 des Gehäuses 1 nebeneinander in diesem angeordnet sind und an ihren einander zugewandten Stirnseiten sich zur Längsmittellinie 2 des Gehäuses 1 einwärts erstreckende Teile 8 bzw. 9 aufweisen. Das zweite hohlzylinderartige Element 7 ist in dem Gehäuse 1 ortsfest angeordnet, während das erste hohlzylindrische Elemente 6 in Richtung der Längsmittellinie 2 in Bezug auf das zweite hohlzylinderartige Element 7 im Gehäuse 1 zu bewegen ist.

Wie am besten aus Fig. 1 zu erkennen ist, begrenzen die einandergegenüberliegenden radial gerichteten Stirnflächen 10 und 11 der beiden hohlzylinderartigen Elemente 6 bzw. 7 die Breite der Schlitzdüse 5, deren Schlitzöffnung 12 kreisringförmig ausgebildet ist. Die sich einwärts erstreckenden Teile 8 und 9 der hohlzylinderartigen Elemente 6 bzw. 7 weisen Abschnitte 13 bzw. 14 auf, die jeweils an die radial gerichteten Stirnflächen 10 bzw. 11 angrenzen, zur kreisringförmigen Schlitzöffnung 12 des Schlitzdüse 5 fluchtend kolinear angeordnet sind und einen in Richtung der Längsmitttellinie 2 des Gehäuses 1 verlaufenden Durchlaß 15 des Gehäuses 1 bilden, in den die kreisringförmige Schlitzöffnung 12 der Schlitzdüse 5 mündet. Durch diesen Durchlaß 15 ist das Bauteil 3 mit der zu untersuchenden Oberfläche 4 in Richtung der Längsmittellinie 2 des Gehäuses 1 zu führen, wie der Pfeil A anzeigt.

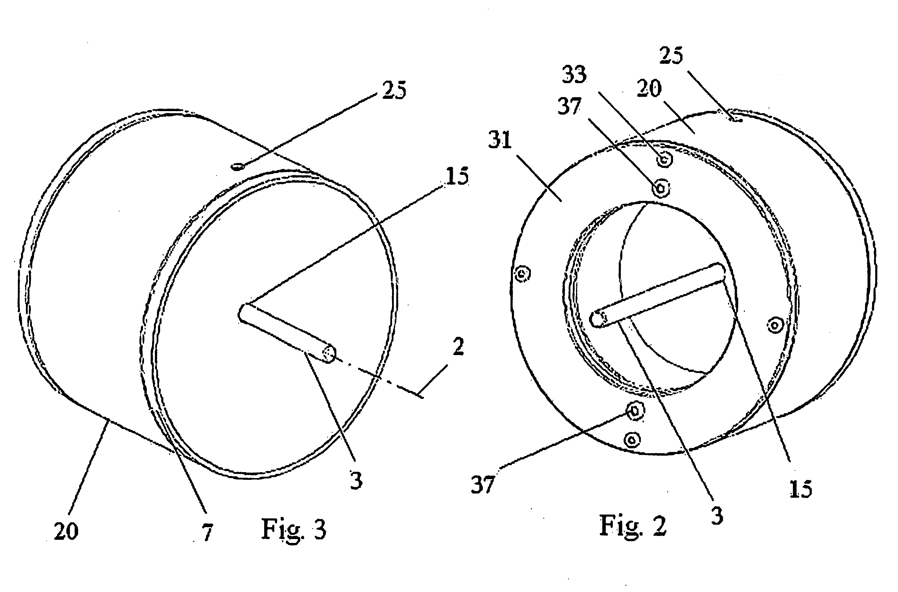

An den radial gerichteten Stirnflächen 10 und 11 der beiden hohlzylinderartigen Elemente 6 bzw. 7 sind außenmantelseitig Ausnehmungen 16 bzw. 17 ausgebildet, die gemeinsam einen ringförmigen, zum Außenmantel 18 des ersten hohlzylinderartigen Elements 6 offenen Hohlraum 19 bilden, der mit der Schlitzdüse 5 kommuniziert. Ein zylindrischer Hohlkörper 20, der koaxial zu dem ersten und dem zweiten hohlzylinderartigen Element 6 und 7 angeordnet ist, umfaßt mit seinem Innenmantel 21 den Außenmantel 18 des ersten hohlzylinderartigen Elements 6 mit Spiel und verschließt den Hohlraum 19 zu einer ringförmigen Druckkammer. Der Außenmantel 22 des zylindrischen Hohlkörpers 20 fluchtet hierbei mit dem Außenmantel 23 des zweiten hohlzylinderartigen Elements 7, das an dem zylindrischen Hohlkörper 20 zu befestigen ist. Die Zylinderwand 24 des Hohlkörpers 20 ist von einem Kanal 25 durchsetzt, der mit der Druckkammer 19 kommuniziert und mit einer äußeren Luftzufuhr 26 zu verbinden ist. Der zylindrische Hohlkörper 20 steht an seinem ersten Ende 27 in Richtung der Längsmittellinie 2 des Gehäuses 1 über das erste hohlzylinderartige Element 6 vor und liegt mit der radial gerichteten Stirnfläche 28 an seinem zweiten Ende 29 an einer innengelegenen umlaufenden Widerlagerfläche 30 des zweiten hohlzylinderartigen Elements 7 an. Am ersten Ende 27 des zylindrischen Hohlkörpers 20 ist eine kreisringförmige Abdeckscheibe 31 vorgesehen, deren Durchmesser gleich dem Durchmesser des Außenmantels 22 des zylindrischen Hohlkörpers 20 ist und die plan an der radial gerichteter Stirnfläche 32 an dessen erstem Ende 27 anliegt. Wie die Fig. 1 und 2 zeigen, ist die Abdeckscheibe 31 mittels Schrauben 33 abnehmbar befestigt, die durch erste Bohrungen 34, die die Abdeckscheibe 31 in Richtung der Längsmittellinie 2 des Gehäuses 1 durchsetzen, geführt und in erste Gewindebohrungen 35 in der Zylinderwand 24 des zylindrischen Hohlkörpers 20 geschraubt sind, die mit den erste Bohrungen 34 fluchten. Hierdurch ist der zylindrische Hohlkörper 20 mit der radialen Stirnfläche 29 an seinem zweiten Ende 28 an der Widerlagerfläche 30 des zweiten hohlzylinderartigen Elements 7 festgelegt.

Die kreisringförmige Abdeckscheibe 31 ist weiterhin in Richtung zur Längsmittellinie 2 von zweite Bohrungen 36 durchsetzt, die von den ersten Bohrungen 34 radial einwärts vorgesehen sind. Einstellschrauben 37, die durch die zweiten Bohrungen 36 und einen ringförmigen Hohlraum 38 verlaufen, der zwischen der Abdeckscheibe 31 und der dieser zugewandten radialen Stirnfläche 39 des ersten hohlzylinderartigen Elements 6 gebildet ist, sind einstellbar in zweite Gewindebohrungen 41 geschraubt, die in der Zylinderwand 40 des ersten hohlzylinderartigen Elements 6 ausgebildet sind und mit den zweiten Bohrungen 36 fluchten. Das erste hohlzylinderartige Element 6, das mit Spiel zum Innenmantel 21 des zylindrischen Hohlkörpers 20 im Gehäuse 1 angeordnet ist, ist in Richtung der Längsmittellinie 2 des Gehäuses 1 durch gleichgerichtetes Drehen der Einstellschrauben 37 in Bezug auf das zweite hohlzylinderartige Element 7 zu versetzen. Hierdurch ist die Breite der Schlitzdüse 5, die von den einandergegenüberliegenden radial gerichteten Stirnflächen 10 und 11 der beiden hohlzylinderartigen Elemente 6 bzw. 7 begrenzt ist, derart einzustellen, daß aus der ringförmigen Schlitzöffnung 12 der Schlitzdüse 5 ein laminarer Druckluftstrom tritt und auf die zu untersuchende Oberfläche 4 des durch den Durchlaß 15 des Gehäuses 1 geführten Bauteils 3 umfangsmäßig gerichtet ist.

Der Abstand der ringförmigen Schlitzöffnung 12 der Schlitzdüse 5 zu der zu untersuchenden Oberfläche 4 des Bauteils 3, d.h. der sogenannte Arbeitsabstand beträgt bei der in den Fig. 1 bis 3 dargestellten Ausführungsform 0,4 mm. Kommt der laminare Druckluftstrom in die Nähe einer Unregelmäßigkeit in der Topographie der zu überprüfenden Oberfläche 4 des Bauteils 3 , so wird die Druckluftströmung turbulent, wodurch unmittelbar ein Rauschen erzeugt wird. Der Schall dieses Rauschens wird von den am Gehäuse 1 angeordneten Mikrofonen 42 erfaßt, wobei zugleich der Schallpegel mittels einer mit den Mikrofonen 42 verbundenen Auswerteeinrichtung in bekannter Weise ausgewertet.

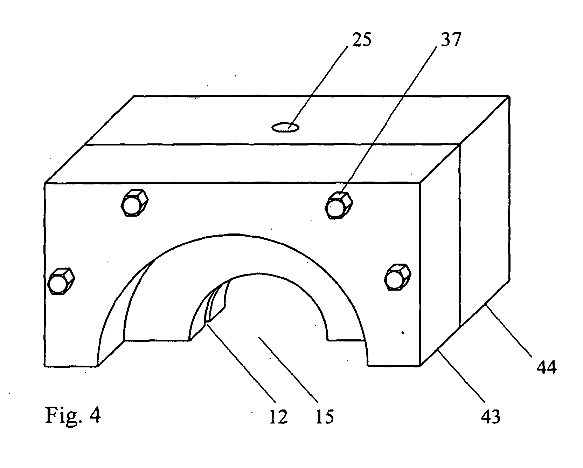

Fig. 4 zeigt eine quaderförmige Gehäusehälfte 1 einer zweiten Ausführungsform der Vorrichtung. Diese Gehäusehälfte 1 kann bei verhältnismäßig kompliziert zugänglichen Bauteilen, wie z.B. Kurbelwellen, zur Erfassung von Unregelmäßigkeiten wie Rissen, Kanten oder dergleichen in der Topographie der Oberfläche eines derartigen Bauteils alleine Anwendung finden, wobei das die zu untersuchende Oberfläche aufweisende Bauteil von der halbkreisringförmigen Schlitzöffnung zu umfassen ist. Die Gehäusehälfte 1 kann jedoch auch mit einer identisch ausgebildeten Gehäusehälfte 1 gekoppelt werden, wobei die beiden Gehäusehälften 1 an dem die zu untersuchende Oberfläche aufweisende Bauteil spiegelbildlich so anzuordnen sind, daß letzteres von der kreisringförmigen Schlitzöffnung des zusammengesetzten Gehäuses 1 kreisringförmig umfaßt ist.

Wie aus Fig. 4 hervorgeht, weisen - im Prinzip analog zur ersten Ausführungsform gemäß Fig. 1 - die die halbkreisringförmige Schlitzdüse breitenmäßig begrenzenden Teile 8 und 9 des ersten und zweiten hohlzylinderartigen Elements 6 bzw. 7 in der Gehäusehälfte 1 die Form eines halben Hohlzylinders auf, zu dessen Innenmantel die halbkreisringförmige Schlitzöffnung 12 der halbkreisringförmigen Schlitzdüse koplanar angeordnet ist. Die halben Hohlzylinder sind identisch gestaltet und jeweils zwischen einem ersten und einem zweiten plattenartigen Körper 43 bzw. 44 eingefaßt sind, die miteinander verbunden sind und die quaderförmige Gehäusehälfte 1 bilden. In der Gehäusehälfte 1 ist das zweite Element 7 ortsfest und das erste Element 6 mit Spiel zur Innenwand 21 der Gehäusehälfte 1 beweglich positioniert. Einstellschrauben 37 sind durch zweite Bohrungen 36, die im ersten plattenförmigen Körper 43 ausgebildet sind, in Rich-Richtung der Längsmittellinie 2 geführt und in zweite Gewindebohrungen 41, die im zweiten plattenartigen Körper 44 ausgebildet sind, verstellbar eingeschraubt. Durch ein gleichgerichtetes Drehen der Einstellschrauben 37 ist das erste Element 6 in Bezug auf das zweite Element 7 in der Gehäusehälfte 1 zu versetzen und die Breite der halbkreisförmigen Schlitzdüse 5 dabei zu verändern.

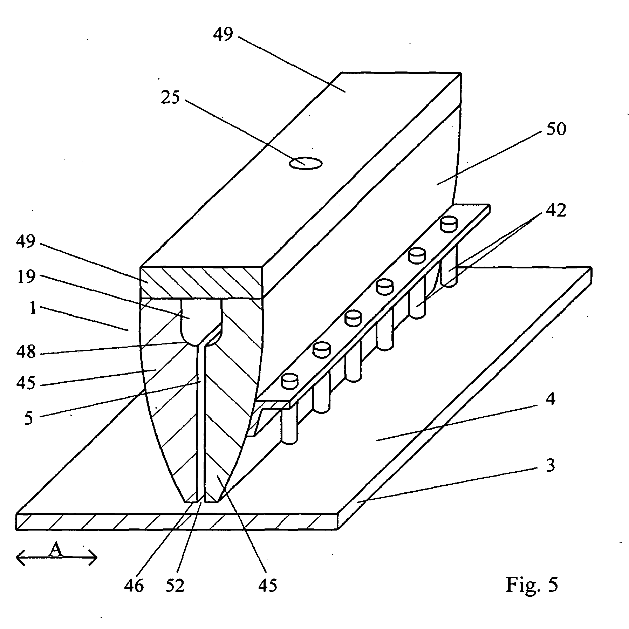

Fig. 5 zeigt schematisch eine dritte Ausführungsform der Vorrichtung, die zum Erfassen von Unregelmäßigkeiten in der Topographie einer Oberfläche an einem ebenen Bauteil dient und ein Gehäuse 1 mit zwei spiegelbildlich keilartig gestalteten Düsenplatten 45 aufweist, die zu einander beabstandet sind und sich über die Länge des Gehäuses 1 erstrecken. Die beiden Düsenplatten 45 begrenzen breitenmäßig eine Längsschlitzdüse 5 mit Längsschlitzöffnung 52 , die in der Ebene des Gehäuses 1 liegt, in der sich die unteren Längskanten 46 der Düsenplatten 45 erstrecken. Die Düsenplatten 46 weisen innenseitig an den oberen Längskanten 47 jeweils eine sich über die Länge des Gehäuses 1 erstreckende Ausnehmung 48 auf, wobei ein Hohlraum 19 gebildet ist. Eine auf den oberen Längskanten 47 der Düsenplatten 45 über deren Länge aufliegende Abdeckplatte 49 verschließt den Hohlraum 19 zu einer Druckkammer, die mit der Längsschlitzdüse 5 kommuniziert. Die Abdeckplatte 49 ist von einem Kanal 5 durchsetzt, über den die Druckkammer 19 mit einer äußeren Druckluftzufuhr 26 zu verbinden ist.

Das Gehäuse 1 und das die zu untersuchende Oberfläche 4 aufweisende Bauteil 3 sind mit geringfügigem Arbeitsabstand relativ zu einander beweglich derart vorzusehen, daß die zu untersuchende Oberfläche 4 an dem Bauteil 3 von einem aus der Längsschlitzöffnung 52 gerichteten laminaren Druckluftstrom fortschreitend entsprechend flächenmäßig anzuströmen ist. Hierbei ist zugleich mittels einer Vielzahl Mikrofone 42, die an den Außenflächen 50 der Düsenplatten 46 über deren Länge im Abstand zueinander gehaltert sind, fortlaufend eine momentan entsprechend flächenmäßige Überprüfung der Topographie der zu untersuchenden Oberfläche 4 an dem ebenen Bauteil 3 gegeben.

### Liste der Bezugszeichen:

- 1: Gehäuse
- 2: Längsmittellinie des Gehäuses
- 3: Bauteil
- 4: zu untersuchende Oberfläche des Bauteils
- 5: Schlitzdüse
- 6: erstes hohlzylinderartiges Element
- 7: zweites hohlzylinderartiges Element
- 8: Teil des ersten hohlzylinderartigen Elements
- 9: Teil des zweiten hohlzylinderartigen Elements
- 10: radial gerichtete Stirnfläche des ersten hohlzylinderartigen Elements
- 11: radial gerichtete Stirnfläche des zweiten hohlzylinderartigen Elements
- 12: kreisringförmige Schlitzöffnung
- 13: Abschnitt des Teils des ersten hohlzylinderartigen Elements
- 14: Abschnitt des Teils des zweiten hohlzylinderartigen Elements
- 15: Durchlaß im Gehäuse
- 16: Ausnehmung im ersten hohlzylinderartigen Element
- 17: Ausnehmung im zweiten hohlzylinderartigen Element
- 18: Außenmantel des ersten hohlzylinderartigen Elements
- 19: Hohlraum, Druckkammer
- 20: zylindrischer Hohlkörper
- 21: Innenmantel des zylindrischen Hohlkörpers
- 22: Außenmantel des zylindrischen Hohlkörpers
- 23: Außenmantel des zweiten hohlzylinderartigen Elements
- 24: Zylinderwand des zylindrischen Hohlkörpers
- 25: Kanal
- 26: äußere Druckluftzufuhr
- 27: erstes Ende des zylindrischen Hohlkörpers
- 28: zweites Ende des zylindrischen Hohlkörpers
- 29: radialgerichtete Stirnfläche am zweiten Ende des zylindrischen Hohlkörpers
- 30: Widerlagerfläche
- 31: kreisringförmige Abdeckscheibe
- 32: radial gerichtete Stirnfläche am ersten Ende des zylindrischen Hohlkörpers
- 33: Schrauben
- 34: erste Bohrungen
- 35: erste Gewindebohrungen
- 36: zweite Bohrungen
- 37: Einstellschrauben
- 3 8: ringförmiger Hohlraum
- 39: radial gerichtete Stirnfläche des ersten hohlzylinderartigen Elements
- 40: Zylinderwand des ersten hohlzylinderartigen Elements
- 41: zweite Gewindebohrungen
- 42: Mikrofone
- 43: erster plattenartiger Körper
- 44: zweiter plattenartiger Körper
- 45: Düsenplatten
- 46: untere Längskanten der Düsenplatten
- 47: obere Längskanten der Düsenplatten
- 48: Ausnehmung
- 49: Abdeckplatte
- 50: Außenflächen der Düsenplatten
- 51: Transporteinrichtung
- 52: Längsschlitzöffnung
- A: Pfeil

## Patentansprüche

1. Verfahren zum Erfassen von Unregelmäßigkeiten in der Topographie von Oberflächen an Bauteilen, insbesondere an rotationssymmetrischen Bauteilen, mittels eines auf die zu untersuchende Oberfläche an dem Bauteil aus einer Düsenöffnung zu richtenden wirbelarmen Gasstroms, wobei der beim Strömen des Gasstroms über Unregelmäßigkeiten in der Topographie der Oberfläche durch Strömungsrauschen erzeugte Schall detektiert und ausgewertet wird,
**dadurch gekennzeichnet, daß**
- eine Schlitzdüse mit einer sich flächenmäßig erstreckenden Schlitzöffnung verwendet wird, die senkrecht zur Mittenebene der Schlitzdüse angeordnet ist,
- das die Schlitzdüse enthaltenen Gehäuse und das die zu untersuchende Oberfläche aufweisende Bauteil relativ zueinander bewegt werden,
- die sich flächenmäßig erstreckende Schlitzöffnung in geringfügigen Arbeitsabstand zu der zu untersuchenden Oberfläche an dem Bauteil positioniert wird,
- die zu untersuchende Oberfläche an dem Bauteil von einem aus der sich flächenmäßig erstreckenden Schlitzöffnung gerichteten laminaren Druckluftstrom fortschreitend entsprechend flächenmäßig angeströmt wird und
- gleichzeitig fortgesetzt eine momentan entsprechend flächenmäßige Überprüfung der Topographie der zu untersuchenden Oberfläche an dem Bauteil auf Unregelmäßigkeiten mittels einer Vielzahl Mikrofone erfolgt.

2. Verfahren nach Anspruch 1, **dadurch gekennzeichnet, daß**
- eine zumindest teilkreisringförmige Schlitzdüse mit einer entsprechenden Schlitzöffnung verwendet wird,
- das die zu untersuchende Oberfläche aufweisende Bauteil senkrecht zur radialen Mittenebene der Schlitzdüse in geringfügigem Arbeitsabstand zur teilkreisringförmigen Schlitzöffnung geführt wird,
- das die zu untersuchende Oberfläche aufweisende Bauteil umfangsmäßig zumindest teilkreisringförmig von einem laminaren Druckluftstrom angeströmt wird und
eine momentan gleichzeitige flächenmäßige Überprüfung eines zumindest teilkreisringförmigen Flächenteils der zu untersuchenden Oberfläche an dem Bauteil auf Unregelmäßigkeiten in der Topografie der Oberfläche mittels der Vielzahl der Mikrofone erfolgt.

3. Verfahren nach Anspruch 2, **dadurch gekennzeichnet, daß** eine Schlitzdüse mit einer kreisringförmigen Schlitzöffnung verwendet wird.

4. Verfahren nach einem der Ansprüche 1 bis 3, **dadurch gekennzeichnet, daß** die Schlitzöffnung der Schlitzdüse und die zu untersuchende Oberfläche an dem Bauteil relativ zueinander bewegt werden.

5. Vorrichtung zum Erfassen von Unregelmäßigkeiten in der Topographie von Oberflächen an Bauteilen, insbesondere an rotationssymmetrischen Bauteilen, mit einer in einem Gehäuse ausgebildeten Düse zur Erzeugung eines von der Düsenöffnung auf die zu untersuchende Oberfläche an dem Bauteil gerichteten wirbelarmen Gasstroms und mit mindestens einem Schalldetektor oder Mikrofon zur Erfassung des durch den Gasstrom erzeugten Schalls,
**dadurch gekennzeichnet, daß**
- eine zumindest teilkreisringförmige, breitenmäßig zu verstellende Schlitzdüse (5) mit einer zumindest teilkreisringförmigen Schlitzöffnung (12) vorgesehen ist, zu deren mittigen Radialebene die zu untersuchende Oberfläche (4) an dem Bauteil (3) winklig im Gehäuse (1) anzuordnen ist derart,
- daß die teilkreisringförmige Schlitzöffnung (12) in geringfügigen Arbeitsabstand zu der zu untersuchenden Oberfläche (4) an dem Bauteil (3) dieses zumindest teilkreisringformig umfaßt und die zu untersuchende Oberfläche (4) an dem Bauteil (3) von einem aus der teilkreisringförmigen Schlitzöffnung (12) zugerichteten laminaren Druckluftstrom zumindest teilkreisringförmig anzuströmen ist,
- wobei mehrere Mikrofone (42) in zumindest teilringförmig Anordnung außen am Gehäuse (1) zur Erfassung des durch den Druckluftstrom erzeugten Schalls vorgesehen sind.

6. Vorrichtung nach Anspruch 5, **dadurch gekennzeichnet, daß** die Schlitzöffnung (12) der Schlitzdüse (5) als kompletter Ring gestaltet ist.

7. Vorrichtung nach Anspruch 5 und 6, **dadurch gekennzeichnet, daß** das die Schlitzdüse (5) enthaltene Gehäuse (1) rotationssysmmetrisch ist.

8. Vorrichtung nach 5 bis 7, **dadurch gekennzeichnet , daß** das die Schlitzdüse (12) enthaltene Gehäuse (1) die Form eines Zylinders aufweist.

9. Vorrichtung nach Anspruch 5, **dadurch gekennzeichnet, daß** das die Schlitzdüse (12) enthaltene Gehäuse (1) eine zumindest teilzylindrische Form aufweist.

10. Vorrichtung nach Anspruch 5 bis 8, **dadurch gekennzeichnet, daß** das die Schlitzdüse (5) enthaltene Gehäuse (1) zusammenzubauen ist aus:
- einem ersten und einem zweiten hohlzylinderartigen Element ( 6 und 7), die koaxial zur Längsmittellinie (2) des Gehäuses (1) nebeneinander angeordnet und relativ zueinander zu versetzen sind und an den einander zugewandten Stirnseiten sich zur Längsmittellinie (2) des Gehäuses (1) einwärts erstreckende Teile (13 bzw. 14) aufweisen mit einandergegenliegenden radial gerichteten Stirnflächen (10 bzw. 11), die die Schlitzdüse (5) breitenmäßig begrenzen, mit Abschnitten (13 bzw. 14), die jeweils an die radial gerichteten Stirnflächen (10 bzw. 11) angrenzen, zur kreisringförmigen Schlitzöffnung (12) der Schlitzdüse (5) fluchtend koplanar angeordnet sind und einen in Richtung der Längsmittellinie (2) des Gehäuses (1) verlaufenden Durchlaß (15) des Gehäuses (1) bilden, durch den das Bauteil(3) mit der zu untersuchenden Oberfläche (4) zu führen ist und in den die kreisringförmige Schlitzöffnung (12) der Schlitzdüse (5) mündet, und
mit Ausnehmungen (16 und 17), die an den radialen Stirnflächen (10 bzw. 11) außenmantelseitig ausgebildet sind und gemeinsam einen ringförmigen Hohlraum (19) bilden, der zum Außenmantel (18) des ersten hohlzylinderartigen Elements (6) offen ist und mit der Schlitzdüse (5) kommuniziert,
- aus einem zylindrischen Hohlkörper (20), der koaxial zu dem ersten und dem zweiten hohlzylinderartigen Element (6 und 7) angeordnet ist,
dessen Innenmantel (21) den Außenmantel (18) des ersten hohlzylinderartigen Elements (6) mit Spiel umfaßt und den Hohlraum (19) zu einer ringförmigen Druckkammer verschließt,
wobei der Außenmantel (22) des zylindrischen Hohlkörpers (20) mit dem Außenmantel (23) des zweiten hohlzylinderartigen Elements (7) fluchtet, das an dem zylindrischen Hohlkörper (29 zu befestigen ist,
die Zylinderwand (24) des zylindrischen Hohlkörpers (20) von einem Kanal (25) durchsetzt ist, der mit der Druckkammer (19) kommuniziert und mit einer äußeren Druckluftzufuhr (26) zu verbinden ist, und
wobei der zylindrische Hohlkörper (20) an seinem ersten Ende (27) in Richtung der Längsmittellinie (2) des Gehäuses (1) über das erste hohlzylinderartige Elemente (6) vorsteht
und mit der radial gerichtete Stirnfläche (29) an seinem zweiten Ende (28) an einer innengelegenen umlaufenden Widerlagerfläche (30) des zweiten hohlzylinderartigen Elements (7) anliegt,
- aus einer kreisringförmigen Abdeckscheibe (31), deren Außendurchmesser gleich dem Durchmesser des Außenmantels (22) des zylindrischen Hohlkörpers (20) ist, und die plan an der radial gerichteten Stirnfläche (32) am ersten Ende (27) des zylindrischen Hohlkörpers (20) anliegt und mittels Schrauben (33) abnehmbar befestigt ist, die durch erste Bohrungen (34), die die Abdeckscheibe (31) in Richtung der Längsmittellinie (2) des Gehäuses 1) durchsetzen, geführt und in mit den ersten Bohrungen (34) fluchtende erste Gewindebohrungen (35) in der Zylinderwand (24) des zylindrischen Hohlkörpers (20) geschraubt sind, wobei der zylindrische Hohlkörper (20) mit der radial gerichteten Stirnfläche (29) an seinem zweiten Ende (28) an der Widerlagerfläche (30) des zweiten hohlzylinderartigen Elements (7) festgelegt ist, und
- aus Einstellschrauben (37), die durch zweite Bohrungen (36), die die Abdeckscheibe (31) ebenfalls in Richtung der Längsmittellinie (2) des Gehäuses (1) durchsetzen, und durch einen ringförmigen Hohlraum (38) zwischen der Abdeckscheibe (31) und der dieser zugewandten radial gerichteten Stirnfläche (39) des ersten hohlzylinderartigen Elements (7) geführt und in zweite Gewindebohrungen (41) geschraubt sind, die in der Zylinderwand (40) des ersten hohlzylinderartigen Elements (6) ausgebildet sind und mit den zweiten Bohrungen (36) fluchten,
wobei durch ein gleichgerichtetes Drehen der Einstellschrauben (37) das erste hohlzylinderartige Element (6), das mit Spiel zum Innenmantel (21) des zylindrischen Hohlkörpers (20) angeordnet ist, in Richtung der Längsmittellinie (2) des Gehäuses (1) in Bezug auf das zweite hohlzylinderartige Element (7) zu versetzen und die Breite der Schlitzdüse (5) derart einzustellen ist, daß aus der kreisringförmigen Schlitzöffnung (12) der Schlitzdüse (5), die mit der Druckkammer (19) kommuniziert, ein laminarer Druckluftstrom auf die untersuchende Oberfläche (4) an dem Bauteil (3) gerichtet ist, das durch den Durchlaß (15) des Gehäuses (1), der von den Teilen (8 und 9) des ersten und des zweiten hohlzylinderartigen Elements (6 bzw. 7) gebildet ist, in Richtung der Längsmittellinie (2) des Gehäuses (1) zu führen ist.

11. Vorrichtung nach Anspruch 10, **dadurch gekennzeichnet, daß** das die Schlitzdüse (5) enthaltende Gehäuse (1) und das die zu untersuchenden Oberfläche (4) aufweisende Bauteil (3) relativ zueinander zu bewegen sind.

12. Vorrichtung nach Anspruch 10 und 11, **dadurch gekennzeichnet, daß** das die Schlitzdüse (5) enthaltenen Gehäuse (1) ortsfest gelagert und das die zu untersuchende Oberfläche (4 ) aufweisende Bauteil (1) von einer Transporteinrichtung (51) in Richtung der Längsmittellinie (2) des Gehäuse (1) fortlaufend zu bewegen ist.

13. Vorrichtung nach Anspruch 10 und 11, **dadurch gekennzeichnet, daß** das die Schlitzdüse (5) enthaltene Gehäuse robotermäßig entlang des die zu untersuchende Oberfläche (4) aufweisenden Bauteils (3) zu führen ist.

14. Vorrichtung nach Anspruch 10, **dadurch gekennzeichnet, daß** die die Schlitzdüse (5) breitenmäßig begrenzenden Teile (8; 9) des ersten und des zweiten hohlzylinderartigen Elements (6 bzw. 7) jeweils die Form eines halben Hohlzylinders aufweisen, die identisch gestaltet und jeweils zwischen einem ersten und einem zweiten plattenartigen Körpern (43; 44) eingefaßt sind, die miteinander verbunden sind und eine quaderförmige Gehäusehälfte (1a) bilden, in der das zweite Element (7) ortsfest und das erste Element (6) mit Spiel zur Innenwand (21) der Gehäusehälfte (1) beweglich positioniert sind, und daß Einstellschrauben (37) durch zweite Bohrungen (36), die im den ersten plattenförmigen Körper (43) ausgebildet sind, in Richtung der Längsmittellinie (2) geführt und in zu den zweiten Bohrungen (36) fluchtende zweite Gewindbohrungen (42) im zweiten plattenartigen Körper (44) verstellbar eingeschraubt sind,
wobei durch ein gleichgerichtetes Drehen der Einstellschrauben (37) das erste Element (6) in Bezug auf das zweite Element (7) in der Gehäusehälfte (1) zu versetzen und die Breite der halbkreisringförmigen Schlitzdüse (5) dabei zu verändern ist.

15. Vorrichtung nach Anspruch 10 bis 14, **dadurch gekennzeichnet, daß** die Einstellschrauben (38) gesteuert zur automatischen Anpassung der Breite der Schlitzdüse einzustellen sind.

16. Vorrichtung zum Erfassen von Unregelmäßigkeiten in der Topographie von Oberflächen an Bauteilen, mit einer in einem Gehäuse ausgebildeten Düse zur Erzeugung eines von der Düsenöffnung auf die zu untersuchende Oberfläche an dem Bauteil gerichteten wirbelarmen Gasstroms und mit mindestens einem Schalldetektor oder Mikrofon zur Erfassung des durch den Gasstrom erzeugten Schalls,
**dadurch gekennzeichnet, daß**
das Gehäuse (1) zwei spiegelbildliche, zu einander beabstandete Düsenplatten (45) aufweist, die sich über die Länge des Gehäuses (1) erstrecken, von diesem stirnseitig abgedeckt sind und eine Längsschitzdüse (5) mit einer in einer Gehäuseebene liegenden Längsschlitzöffnung (52) breitenmäßig verstellbar begrenzen, mittels Einstellschrauben relativ zueinander zu bewegen sind und innenseitig entgegengesetzt zur Längsschlitzöffnung (52) zusammen mit einer Abdeckplatte (49), die auf den zur Längsschlitzöffnung (52) entgegengesetzten oberen Längskanten (47) der Düsenplatten (45) über deren Länge aufliegt, einen Hohlraum (19) einfassen, der eine Druckkammer bildet, die über einen die Abdeckplatte (49) durchsetzenden Kanal (5) mit einer äußeren Druckluftzufuhr (26) zu verbinden ist und mit der Längsschlitzdüse (5) kommuniziert, wobei das Gehäuse (1) relativ beweglich zu der zu untersuchenden Oberfläche (4) an dem Bauteil (3) zu haltern ist derart, daß die zu untersuchende Oberfläche (4) an dem Bauteil (3) von einem aus der Längsschlitzöffnung (52) gerichteten laminaren Druckluftstrom fortschreitend entsprechend flächenmäßig anzuströmen ist und gleichzeitig mittels einer Vielzahl Mikrofone (42), die an den Außenflächen (50) der Düsenplatten (45) im Abstand zueinander gehaltert sind, fortlaufend eine momentan entsprechend flächenmäßige Überprüfung der Topografie der zu untersuchenden Oberfläche (4) an dem Bauteil (3) gegeben ist.

## Claims

1. A method for detecting irregularities in the topography of surfaces at components, in particular at rotational symmetrical components by means of a low-turbulence gas flow, which is to be directed to the surface to be examined on the component from a nozzle opening, wherein the sound generated via irregularities in response to the flow of the gas flow in the topography of the surface by means of flow noise is detected and evaluated,
**characterized in that**
- a slit nozzle is used, which comprises a slit opening extending by surface area, which is arranged at right angles to the center plane,
- that the housings including slit nozzle and the component encompassing the surface to be examined are moved relative to one another,
- the slit opening extending by surface area is positioned on the component at a slight operating distance to the surface to be examined,
- the surface to be examined on the component is flown against by a laminar air jet gradually correspondingly by surface area from the slit opening extending by surface area and
- a current corresponding examination by surface area of the topography of the surface to be examined takes place on the component with reference to irregularities by means of a plurality of microphones in a simultaneously continued manner.

2. The method according to claim 1, **characterized in that**
- an at least partially annulus-shaped slit nozzle comprising a corresponding slit opening is used,
- that the component encompassing the surface to be examined is guided at right angles to the radial center plane of the slit nozzle at a slight operating distance to the partially annulus-shaped slit opening,
- that the component encompassing the surface to be examined is peripherally flown against by a laminar air jet at least in a partially annulus-shaped manner and
that a current simultaneous examination of an at least partially annulus-shaped surface part of the surface to be examined at the component with reference to irregularities takes place in the topography of the surface by means of the plurality of the microphones.

3. The method according to claim 2, **characterized in that** a slit nozzle comprising an annulus-shaped slit opening is used.

4. The method according to one of claim 1 to 3, **characterized in that** the slit opening of the slit nozzle and the surface to be examined at the component are moved relative to one another.

5. A device for detecting irregularities in the topography of surfaces at components, in particular at rotational symmetrical components, comprising a nozzle embodied in a housing for generating a low-turbulence gas flow, which is directed to the surface to be examined on the component from a nozzle opening and comprising at least one sound detector or microphones for detecting the sound generated by the gas flow,
**characterized in that**
- an at least partially annulus-shaped slit nozzle (5), the width of which is to be adjusted, is provided with an at least partially annulus-shaped slit opening (12), to the central radial plane of which the surface (4) to be examined on the component (3) is to be arranged so as to be angled in the housing (1) such
- that the partially annulus-shaped slit opening (12) comprises said component (3) in an at least partially annulus-shaped manner at a slight operating distance to the surface (4) to be examined on the component (3) and the surface (4) to be examined on the component (3) is to be flown against at least in a partially annulus-shaped manner by a laminar air jet directed from the partially annulus-shaped slit opening (12),
- wherein provision is made for a plurality of microphones (42) in an at least partially annulus-shaped arrangement outside on the housing (1) for the purpose of detecting the sound generated by the air jet.

6. The device according to claim 5, **characterized in that** the slit opening (12) of the slit nozzle (5) is designed as a complete ring.

7. The device according to claim 5 and 6, **characterized in that** the housing (1) including the slit nozzle (5) is rotational symmetrical.

8. The device according to claim 5 to 7, **characterized in that** the housing (1) including the slit nozzle (12) encompasses the shape of a cylinder.

9. The device according to claim 5, **characterized in that** the housing (1) including the slit nozzle (12) encompasses an at least partially cylindrical shape.

10. The device according to claim 5 to 8, **characterized in that** the housing (1) including the slit nozzle (5) is to be assembled from:
- a first and a second hollow cylindrical-like element (6 and 7), which are arranged coaxially to the longitudinal center line (2) of the housing (1) next to one another and which are to be offset relative to one another and which encompass parts (13 and 14, respectively) at the front faces facing one another and extending inwardly to the longitudinal center line (2) of the housing (1) comprising radially oriented front faces (10 and 11, respectively), which are located so as to be adjoined, which define the width of the slit nozzle (5), comprising sections (13 and 14, respectively), which in each case adjoin the radially oriented front faces (10 and 11, respectively), being arranged so as to be aligned in a coplanar manner to the annular-shaped slit opening (12) of the slit nozzle (5) and forming an outlet (15) of the housing (1) running in the direction of the longitudinal center line (2) of the housing (1), through which outlet (15) the component (3) comprising the surface (4) to be examined is to be guided into which the annular-shaped slit opening (12) of the slit nozzle (5) opens and comprising recesses (16 and 17), which are embodied at the outer jacket side on the radial front faces (10 and 11, respectively), and which together form a circular cavity (19), which is open towards the outer jacket (18) of the first hollow cylindrical-like element (6) and which communicates with the slit nozzle (5),
- of a cylindrical hollow body (20), which is arranged so as to be coaxial to the first and the second hollow cylindrical-like element (6 and 7),
the inner jacket (21) of which comprises the outer jacket (18) of the first hollow cylindrical-like element (6) with play and which closes the cavity (19) to a circular pressure chamber,
wherein the outer jacket (22) of the cylindrical hollow body (20) is aligned with the outer jacket (23) of the second hollow cylindrical-like element (7), which is to be fastened to the cylindrical hollow body (29),
the cylinder wall (24) of the cylindrical hollow body (20) is permeated by a channel (25), which communicates with the pressure chamber (19) and which is to be connected to an outer compressed air supply (26) and
wherein the cylindrical hollow body (20) projects beyond the first hollow cylindrical-like element (6) at its first end (27) in the direction of the longitudinal center line (2) of the housing (1) and abuts with the radially oriented front face (29) at its second end (28) on an inward revolving thrust bearing surface (30) of the second hollow cylindrical element (7),
- from an annular-shaped cover disk (31), the outer diameter of which is the same as the diameter of the outer jacket (22) of the cylindrical hollow body (20) and which abuts in a planar manner on the radially oriented front face (32) on the first end (27) of the cylindrical hollow body (20) and which is fastened by means of screws (33) so as to be capable of being removed, which is guided through first bores (34), which permeate the cover disk (31) in the direction of the longitudinal center line (2) of the housing (1) and which are screwed into first tapped bores (35) aligned with the first bores (34) in the cylinder wall (24) of the cylindrical hollow body (20), wherein the cylindrical hollow body (20) comprising the radially oriented front face (29) at its second end (28) is fixed to the thrust bearing surface (30) of the second hollow cylindrical-like element (7) and
- from adjusting screws (37), which are guided through second bores (36), which also permeate the cover disk (31) in the direction of the longitudinal center line (2) of the housing (1) and which are guided through a circular cavity (38) between the cover disk (31) and the radially oriented front face (39) of the first hollow cylindrical-like element (7), which faces said cover disk (31) and are screwed into second tapped bores (41), which are embodied in the cylinder wall (40) of the first hollow cylindrical-like element (6) and which are aligned with the second bores (36), wherein the first hollow cylindrical-like element (6), which is arranged with play to the inner jacket (21) of the cylindrical hollow body (20) is to be offset in the direction of the longitudinal center line (2) of the housing (1) with reference to the second hollow cylindrical-like element (7) and the width of the slit nozzle (5) is to be adjusted by means of an aligned rotation of the adjusting screws (37) in such a manner that a laminar compressed air flow is oriented to the surface (4) to be examined on the component (3), which is to be guided through the outlet (15) of the housing (1), which is formed by the parts (8 and 9) of the first and the second hollow cylindrical-like element (6 and 7, respectively) in the direction of the longitudinal center line (2) of the housing (1) from the circular ring-shaped slit opening (12) of the slit nozzle (5), which communicates with the pressure chamber (19).

11. The device according to claim 10, **characterized in that** the housing (1) including the slit nozzle (5) and the component (3) encompassing the surface (4) to be examined are to be moved relative to one another.

12. The device according to claim 10 and 11, **characterized in that** the housing (1) including the slit nozzle (5) is supported so as to be stationary and the component (1) encompassing the surface (4) to be examined is to be moved continuously by a transport device (51) in the direction of the longitudinal center line (2) of the housing (1).

13. The device according to claim 10 and 11, **characterized in that** the housing including the slit nozzle (5) is to be guided in a robot-like manner along the component (3) encompassing the surface (4) to be examined.

14. The device according to claim 10, **characterized in that** the parts (8, 9) of the first and second hollow cylindrical-like element (6 and 7, respectively), which define the slit nozzle (5) in its width in each case encompass the shape of half of a hollow cylinder, which are embodied so as to be identical and which are in each case enclosed between a first and a second plate-like body (43, 44), which are connected to one another and which form a cuboidal housing half (1a), in which the second element (7) is positioned so as to be stationary and in which the first element (6) is positioned so as to be movable with play to the inner wall (21) of the housing half (1) and that ajduting screws (37) are guided in the direction of the longitudinal center line (2) through second bores (36), which are embodied in the first plate-shaped body (43) and are screwed into second tapped bores (42) in the second plate-like body (44), which are aligned with the second bores (36) so as to be adjustable, wherein the first element (6) is to be offset in the housing half (1) with reference to the second element (7) by means of a rectified rotation of the adjusting screws (37) and the width of the semicircular ring-shaped slit nozzle (5) is to be changed thereby.

15. The device according to claims 10 to 14, **characterized in that** the adjusting screws (38) are to be adjusted so as to be controlled for the purpose of an automatic adaptation of the width of the slit nozzle.

16. A device for detecting irregularities in the topography of surfaces at components, comprising a nozzle embodied in a housing for generating a low-turbulence gas flow, which is directed from a nozzle opening to the surface to be examined on the component and comprising at least one sound detector or microphone for detecting the sound generated by the gas flow,
**characterized in that**
the housing (1) encompasses two nozzle plates (45), which are spaced apart to one another in a mirror-symmetrical manner, which extend across the length of the housing (1), which are covered by the housing (1) on the front face thereof and which define a longitudinal slit nozzle (5) comprising a longitudinal slit opening (52) located in a housing plane in its width so as to be adjustable, which are to be moved relative to one another by means of adjusting screws and which enclose a cavity (19) on the inside opposite to the longitudinal slit opening (52) together with a cover plate (49), which bears across the length thereof on the upper longitudinal flanges (47) of the nozzle plates (45), which are opposite to the longitudinal slit opening (52), said cavity (19) forms a pressure chamber, which is to be connected to an outer compressed air supply (26) via a duct (5), which permeates cover plate (49) and which communicates with the longitudinal slit nozzle (5), wherein the housing (1) is to be fastened on the component (3) so as to be movable relative to the surface (4) to be examined in such a manner that the surface (4) to be examined on the component (3) is to be gradually flown against by a laminar air jet flow correspondingly by surface area oriented from the longitudinal slit opening (52) and an inspection by surface area of the topography of the surface (4) to be examined on the component (3) is given by means of a plurality of microphones (42), which are fastened on the outer surfaces (50) of the nozzle plates (45) at a distance to one another in a simultaneously continued manner.

## Revendications

1. Procédé de détection d'irrégularités dans la topographie de surfaces sur des composants, notamment sur des composants symétriques en rotation, au moyen d'un flux gazeux sans tourbillons à diriger hors d'une ouverture de buse sur la surface à inspecter sur le composant, moyennant quoi le son généré par des bruits d'écoulement lors de l'écoulement du flux gazeux sur des irrégularités dans la topographie de la surface est détecté et évalué,
**caractérisé en ce que**
- une buse à fente comportant une ouverture de fente s'étendant en surface est utilisée, laquelle est disposée perpendiculairement au plan central de la buse à fente,
- le logement contenant la buse à fente et le composant présentant la surface à inspecter sont déplacés relativement l'un à l'autre,
- l'ouverture de fente s'étendant en surface est positionnée à la distance de travail la plus petite possible par rapport à la surface à inspecter sur le composant,
- la surface à inspecter sur le composant est parcourue progressivement en surface par un flux d'air pressurisé laminaire dirigé hors de l'ouverture de fente s'étendant en surface et
- simultanément une vérification de la topographie momentanément en surface correspondante de la surface à inspecter sur le composant est effectuée afin de rechercher des irrégularités au moyen d'une pluralité de microphones.

2. Procédé selon la revendication 1, **caractérisé en ce que**
- au moins une buse à fente en forme de demi-cercle annulaire avec une ouverture de fente correspondante est utilisée,
- le composant présentant la surface à inspecter est guidé perpendiculairement au plan central radial de la buse à fente à la distance de travail la plus petite possible par rapport à l'ouverture de fente en forme de demi-cercle annulaire,
- le composant présentant la surface à inspecter est parcouru sur sa périphérie au moins en forme de demi-cercle annulaire par un flux d'air pressurisé laminaire et
une vérification simultanée en surface momentanée d'une partie de surface au moins en forme de demi-cercle annulaire de la surface à inspecter sur le composant est effectuée afin de rechercher des irrégularités dans la topographie de la surface au moyen de la pluralité de microphones.

3. Procédé selon la revendication 2, **caractérisé en ce que** une buse à fente comportant une ouverture de fente en forme de cercle annulaire est utilisée.

4. Procédé selon une des revendications 1 à 3, **caractérisé en ce que** l'ouverture de fente de la buse à fente et la surface à inspecter sur le composant sont déplacées relativement l'une à l'autre.

5. Dispositif de détection d'irrégularités dans la topographie de surfaces sur des composants, notamment sur des composants symétriques en rotation, comportant une buse réalisée dans un logement pour générer un flux gazeux sans tourbillons dirigé de l'ouverture de buse sur la surface à inspecter sur le composant et au moins un détecteur de sons ou un microphone pour détecter le son généré par le flux gazeux,
**caractérisé en ce que**
- au moins une buse à fente (5) en forme de demi-cercle annulaire, à déplacer en largeur, comportant au moins une ouverture de fente (12) en forme de demi-cercle annulaire est prévue, par rapport au plan radial central de laquelle la surface (4) à inspecter sur le composant (3) est disposée angulairement dans le logement (1) de telle sorte que
- l'ouverture de fente (12) en forme de demi-cercle annulaire à la plus petite distance de travail possible par rapport à la surface (4) à inspecter sur le composant (3) englobe celle-ci au moins en forme de demi-cercle annulaire et la surface (4) à inspecter sur le composant (3) soit parcourue au moins en forme de demi-cercle annulaire par un flux d'air pressurisé laminaire dirigé hors de l'ouverture de fente (12) en forme de demi-cercle annulaire,
- moyennant quoi plusieurs microphones (42) en agencement au moins en forme de demi-cercle sont prévus à l'extérieur sur le logement (1) pour détecter le son généré par le flux d'air pressurisé.

6. Dispositif selon la revendication 5, **caractérisé en ce que** l'ouverture de fente (12) de la buse à fente (5) est conformée comme un anneau complet.

7. Dispositif selon la revendication 5 et 6, **caractérisé en ce que** le logement (1) contenant la buse à fente (5) est symétrique en rotation.

8. Dispositif selon les revendications 5 à 7, **caractérisé en ce que** le logement (1) contenant la buse à fente (12) présente la forme d'un cylindre.

9. Dispositif selon la revendication 5, **caractérisé en ce que** le logement (1) contenant la buse à fente (12) présente une forme au moins partiellement cylindrique.

10. Dispositif selon les revendications 5 à 8, **caractérisé en ce que** le logement (1) contenant la buse à fente (5) est composé de :
- un premier et un deuxième élément cylindrique creux (6 et 7), qui sont disposés côte à côte coaxialement par rapport à la ligne médiane longitudinale (2) du logement (1) et sont déplaçables relativement l'un à l'autre et présentent sur les côtés frontaux tournés l'un vers l'autre des pièces (13, respectivement 14) s'étendant vers l'intérieur par rapport à la ligne médiane longitudinale (2) du logement (1) avec des surfaces frontales (10,respectivement 11) dirigées radialement l'une contre l'autre, qui délimitent en largeur la buse à fente (5), avec des portions (13, respectivement 14), qui avoisinent respectivement les surfaces frontales (10, respectivement 11) orientées radialement, sont disposées en alignement coplanaire par rapport à l'ouverture de fente (12) en forme de cercle annulaire de la buse à fente (5) et forment un passage (15) s'étendant dans la direction de la ligne médiane longitudinale (2) du logement (1), à travers lequel le composant (3) doit être guidé avec la surface (4) à inspecter et débouche dans l'ouverture de fente (12) en forme de cercle annulaire de la buse à fente (5), et
avec des évidements (16 et 17), qui sont réalisés sur les surfaces frontales radiales (10, respectivement 11) du côté de la gaine extérieure et forment conjointement un espace creux (19) de forme annulaire, qui est ouvert dans la direction de la gaine extérieure (18) du premier élément cylindrique creux (6) et communique avec la buse à fente (5),
- un corps creux cylindrique (20), qui est disposé coaxialement par rapport au premier et deuxième élément cylindrique creux (6 et 7),
dont la gaine intérieure (21) englobe la gaine extérieure (18) du premier élément cylindrique creux (6) avec du jeu et obture l'espace creux (19) en une chambre pressurisée annulaire,
moyennant quoi la gaine extérieure (22) du corps creux cylindrique (20) s'aligne avec la gaine extérieure (23) du deuxième élément cylindrique creux (7), qui doit être fixé au corps creux cylindrique (29),
la paroi de cylindre (24) du corps creux cylindrique (20) est traversée par un canal (25), qui communique avec la chambre pressurisée (19) et est relié avec une conduite d'amenée d'air pressurisé (26) extérieure, et
moyennant quoi le cops creux cylindrique (20) dépasse à sa première extrémité (27) dans la direction de la ligne médiane longitudinale (2) du logement (1) par-dessus le premier élément cylindrique creux (6) et repose par la surface frontale (29) orientée radialement sur sa deuxième extrémité (28) sur une surface de butée (30), faisant le tour de la circonférence interne du deuxième élément cylindrique creux (7),
- un couvercle circulaire (31), dont le diamètre externe est similaire au diamètre de la gaine extérieure (22) du corps creux cylindrique (20), et qui est fixé de manière amovible à plat sur la surface frontale (32) orientée radialement sur la première extrémité (27) du corps creux cylindrique (20) au moyen de vis (33), qui sont guidées à travers des premiers alésages (34), qui traversent le couvercle (31) dans la direction de la ligne médiane longitudinale (2) du logement (1), et sont vissées avec des premiers pas de vis filetés (35) s'alignant avec les premiers alésages (34) dans la paroi de cylindre (24) du corps creux cylindrique (20), moyennant quoi le corps creux cylindrique (20) est fixé par la surface frontale (29) orientée radialement sur sa deuxième extrémité (28) à la surface de butée (30) du deuxième élément cylindrique creux (7), et
- des vis de réglage (37), qui sont guidées à travers des deuxièmes alésages (36), qui traversent le couvercle (31) également dans la direction de la ligne médiane longitudinale (2) du logement (1), et à travers un espace creux (38) annulaire tourné vers celui-ci du premier élément cylindrique creux (7) et sont vissées dans des deuxièmes pas de vis filetés (41), qui sont réalisés dans la paroi de cylindre (40) du premier élément cylindrique creux (6) et s'alignent avec les deuxièmes alésages (36), moyennant quoi en tournant dans le même sens les vis de réglage (37), le premier élément cylindrique creux (6), qui est disposé avec du jeu par rapport à la gaine intérieure (21) du corps creux cylindrique (20), est déplacé dans la direction de la ligne médiane longitudinale (2) du logement (1) par rapport au deuxième élément cylindrique creux (7) et la largeur de la fente de buse (5) est réglée de telle sorte que, hors de l'ouverture de fente (12) en forme de cercle annulaire de la buse à fente (5), qui communique avec la chambre pressurisée (19), un flux d'air pressurisé laminaire soit dirigé sur la surface à inspecter (4) sur le composant (3), lequel est guidé dans la direction de la ligne médiane longitudinale (2) du logement (1) à travers le passage (15) du logement (1), qui est formé par des pièces (8 et 9) du premier et deuxième élément cylindrique creux (6, respectivement 7).

11. Dispositif selon la revendication 10, **caractérisé en ce que** le logement (1) contenant la buse à fente (5) et le composant (3) présentant la surface (4) à inspecter sont déplaçables relativement l'un à l'autre.

12. Dispositif selon la revendication 10 et 11, **caractérisé en ce que** le logement (1) contenant la buse à fente (5) est positionné de manière stationnaire et le composant (1) présentant la surface à inspecter (4) est déplaçable en continu par un dispositif de transport (51) dans la direction de la ligne médiane longitudinale (2) du logement (1).

13. Dispositif selon la revendication 10 et 11, **caractérisé en ce que** le logement contenant la buse à fente (5) est guidé par un robot le long du composant (3) présentant la surface à inspecter (4).

14. Dispositif selon la revendication 10, **caractérisé en ce que** les pièces (8; 9) délimitant en largeur la buse à fente (5) du premier et deuxième élément cylindrique creux (6, respectivement 7) présentent respectivement la forme d'un demi-cylindre creux, ont une configuration identique et sont respectivement encastrées entre un premier et un deuxième corps (43; 44) en forme de plaque, qui sont reliés l'un à l'autre et forment une moitié de logement (la) en forme de parallélépipède, dans laquelle le deuxième élément (7) est positionné de manière stationnaire et le premier élément (6) est positionné de manière mobile avec du jeu par rapport à la paroi interne (21) de la moitié de logement (1), et **en ce que** des vis de réglage (37) sont guidées dans la direction de la ligne médiane longitudinale (2) à travers des deuxièmes alésages (36), qui sont réalisés dans le premier corps (43) en forme de plaque, et sont vissées avec possibilité de réglage dans des deuxièmes pas de vis filetés (42) s'alignant sur les deuxièmes alésages (36) dans le deuxièmes corps (44) de type plaque, moyennant quoi en tournant dans le même sens les vis de réglage (37), le premier élément (6) est déplacé par rapport au deuxième élément (7) dans la moitié de logement (1) et la largeur de la buse à fente (5) en forme de demi-cercle annulaire peut ainsi être modifiée.

15. Dispositif selon les revendications 10 à 14, **caractérisé en ce que** les vis de réglage (38) peuvent être réglées par une unité de commande afin de s'adapter automatiquement à la largeur de la buse à fente.

16. Dispositif de détection d'irrégularités dans la topographie de surfaces sur des composants, comportant une buse réalisée dans un logement pour générer un flux gazeux sans tourbillons dirigé hors de l'ouverture de buse sur la surface à inspecter sur le composant et au moins un détecteur de sons ou un microphone pour détecter le son généré par le flux gazeux,
**caractérisé en ce que**
le logement (1) présente deux plaques de buse (45) symétriques, espacées l'une de l'autre, qui s'étendent sur la longueur du logement (1), sont recouvertes par celui-ci à l'avant et délimitent avec possibilité de réglage une buse à fente longitudinale (5) comportant une ouverture de fente longitudinale (52) située dans un plan du logement, sont déplaçables relativement l'une à l'autre au moyen de vis de réglage qui définissent un espace creux (19) du côté intérieur opposé à l'ouverture de fente longitudinale (52) conjointement à un couvercle (49), qui repose sur les arêtes longitudinales (47) supérieures opposées à l'ouverture de fente longitudinale (52) des plaques de buse (45) sur leur longueur, lequel espace creux forme une chambre pressurisée, qui est reliée par un canal (5) traversant le couvercle (49) avec une conduite d'amenée d'air pressurisé (26) extérieure et communique avec la buse à fente longitudinale (5), moyennant quoi le logement (1) est maintenu de manière déplaçable relativement à la surface à inspecter (4) sur le composant (3) de telle sorte que la surface à inspecter (4) sur le composant (3) soit parcourue progressivement en surface par un flux d'air pressurisé laminaire sortant de l'ouverture de fente longitudinale (52) et simultanément, au moyen d'une pluralité de microphones (42), qui sont maintenus sur les surfaces extérieures (50) des plaques de buse (45) à distance les uns des autres, une vérification en surface momentanée de la topographie de la surface à inspecter (4) sur le composant (3) est effectuée en continu.
